# EUROPÄISCHE PATENTANMELDUNG

(11) **EP 4 684 911 A1**
(43) Veröffentlichungstag der Anmeldung: **28.01.2026**
(21) Anmeldenummer: 25176869.3
(22) Anmeldetag: 16.05.2025
(51) Int. Cl.: B23Q 3/157, B23Q 7/04, B23Q 7/10, B23Q 7/03

(54) **BEARBEITUNGSMASCHINE**

(30) Priorität: 23.07.2024 DE 202024104122 U
(71) Anmelder: POS GmbH & Co. KG, 73098 Rechberghausen (DE)
(72) Erfinder: Helle, Michael, 73098 Rechberghausen (DE)
(74) Vertreter: Ruckh, Rainer Gerhard

(57) **Zusammenfassung**

Die Erfindung betrifft eine Bearbeitungsmaschine (1) mit einer Verfahrbewegungen durchführenden Spindel (2), wobei mit einem an der Spindel (2) gelagerten Werkzeug ein Werkstück (4) bearbeitbar ist und mit einer Fördereinheit, an welcher Werkzeugaufnahmen (8) vorhanden sind, die in einer Förderrichtung bewegbar sind. Jede Werkzeugaufnahme (8) ist zur Lagerung eines Werkzeugs ausgebildet. Die Fördereinheit ist in der Bearbeitungsmaschine (1) integriert. An der Fördereinheit sind Werkstückaufnahmen (9) vorhanden. Jede Werkstückaufnahme (9) ist zur Aufnahme eines Werkstück (4) ausgebildet, wobei die Werkstückaufnahmen (9) und die Werkzeugaufnahmen (8) jeweils räumlich getrennte, in Förderrichtung in Abstand liegende Einheiten bilden. Die in den Werkstückaufnahmen (9) gelagerten Werkstücke (4) sind an der Oberseite der Fördereinheit angeordnet.

## Beschreibung

Die Erfindung betrifft eine Bearbeitungsmaschine.

Eine derartige Bearbeitungsmaschine, spezifisch eine Werkzeugmaschine, dient zum Bearbeiten von Werkstücken. Hierzu weist die Bearbeitungsmaschine eine Spindel auf, an der ein Werkzeug befestigt werden kann, mit dem das jeweilige Werkstück bearbeitet werden kann. Die Spindel ist hierzu verfahrbar, so dass das darin gelagerte Werkzeug Translations- und Rotationsvorgänge durchführen kann, um Bearbeitungsvorgänge wie z.B. Bohren, Fräsen oder Schleifen am Werkstück vornehmen zu können.

Um bei Bedarf Werkzeuge an der Spindel wechseln zu können, können Werkzeugwechsler eingesetzt werden. Diese umfassen typisch eine Fördereinheit mit mehreren Werkzeugaufnahmen. An jeder Werkzeugaufnahme kann ein Werkzeug gelagert werden. Die Fördereinheit kann eine Werkzeugaufnahme in eine Wechselposition fördern, so dass mit der Spindel der Bearbeitungsmaschine ein Werkzeug von der Werkzeugaufnahme aufgenommen wird oder ein Werkzeug an der Werkzeugaufnahme abgelegt wird.

Die DE 10 2017 01 737 B4 betrifft eine Werkzeug-Wechselvorrichtung für eine Werkzeug-Maschine. Mittels der Werkzeug-Wechselvorrichtung sind Werkzeuge einer Wechselposition zuführbar, von welcher das jeweilige Werkzeug einer Werkzeugaufnahme der Werkzeug-Maschine zuführbar ist, mit einer Transfereinheit zum Transport der Werkzeuge. Die Transfereinheit weist eine Anzahl von Kopplungsmitteln auf, mittels derer Werkstücke an die Zuführbewegung der Werkzeuge gekoppelt sind. Die Werkstücke sind mittels der Transfereinheit der Wechselposition zuführbar, von welcher das jeweilige Werkstück einer Bearbeitungsposition zuführbar ist. Die Transfereinheit weist eine diskrete Anordnung von Werkzeugplätzen zur Aufnahme von Werkzeugen auf, wobei jeweils ein Kopplungsmittel mechanisch an einem Werkzeugplatz angebunden ist und einen Werkstückplatz zur Aufnahme von Werkstücken aufweist. Jedes Kopplungsmittel ist von einem L-Profil gebildet, dessen oberes Ende im Bereich des jeweiligen Werkzeugplatzes befestigt ist und dessen horizontaler Schenkel einen Werkstückplatz bildet.

Damit ist vorteilhaft die Funktionalität der Werkzeug-Wechselvorrichtung dahingehend erweitert, dass mit dieser nicht nur ein automatisierter Wechsel von Werkzeugen ermöglicht wird, sondern zugleich eine automatisierte Zuführung von Werkstücken zu vorgegebenen Bearbeitungspositionen.

Nachteilig hierbei ist, dass durch die Verbindung der Kopplungsmittel an die Werkzeugaufnahmen und deren Ausbildung als L-Profile dort nur kleinere Werkstücke mit bestimmten Geometrien gelagert werden können.

Der Erfindung liegt die Aufgabe zugrunde eine Bearbeitungsmaschine mit erweiterter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Bearbeitungsmaschine mit einer Verfahrbewegungen durchführenden Spindel. Mit einem an der Spindel gelagerten Werkzeug ist ein Werkstück bearbeitbar. Weiterhin ist eine Fördereinheit vorhanden, an welcher Werkzeugaufnahmen vorhanden sind, die in einer Förderrichtung bewegbar sind. Jede Werkzeugaufnahme ist zur Lagerung eines Werkzeugs ausgebildet. Die Fördereinheit ist in der Bearbeitungsmaschine integriert. An der Fördereinheit sind Werkstückaufnahmen vorhanden. Jede Werkstückaufnahme ist zur Aufnahme eines Werkstücks ausgebildet, wobei die Werkstückaufnahmen und die Werkzeugaufnahmen jeweils räumlich getrennte, in Förderrichtung in Abstand liegende Einheiten bilden und/oder die in den Werkstückaufnahmen gelagerten Werkstücke an der Oberseite der Fördereinheit angeordnet sind.

Ein wesentlicher Aspekt der Erfindung besteht darin, die Fördereinheit der Bearbeitungsmaschine nicht nur mit Werkzeugaufnahmen, sondern auch mit Werkstückaufnahmen auszustatten, so dass allein mit der Fördereinheit ein Wechsel von Werkzeugen und auch Werkstücken ermöglicht wird.

Dabei ist weiterhin wesentlich, dass mit der Spindel der Bearbeitungsmaschine sowohl Werkzeuge als auch Werkstücke von der Fördereinheit entnommen bzw. in dieser eingelagert werden. Damit ist neben der Spindel keine weitere Einheit notwendig, um neben einem Werkzeug-Wechsel auch einen Werkstück-Wechsel durchzuführen, was zu einer erheblichen Kosteneinsparung führt.

Ein weiterer wesentlicher Aspekt der Erfindung besteht darin, dass die Fördereinheit in der Bearbeitungsmaschine integriert ist, d.h. es wird kein zusätzlicher Platz außerhalb der Bearbeitungsmaschine für Transfereinheiten und dergleichen benötigt, um den Wechsel von Werkzeugen bzw. Werkstücken durchzuführen. Dies stellt nicht nur einen erheblichen Rationalisierungseffekt dar. Vielmehr wird dadurch eine erhebliche Kostenersparnis erzielt, da der Raum in Fabrikhallen begrenzt und teuer ist.

Besonders vorteilhaft ist die Bearbeitungsmaschine als Gantry-Maschine, d.h. Portal-Maschine ausgeführt.

Insbesondere in diesem Fall weist die Bearbeitungsmaschine einen Rüstplatz auf, an welchem Haupt-Zeit-Parallel Rüstvorgänge durchgeführt werden.

Der Rüstplatz ermöglicht eine Zufuhr und Abfuhr von Werkzeugen und Werkstücken an der Fördereinheit während der Bearbeitung von Werkstücken mittels der Spindel der Bearbeitungsmaschine, was einen erheblichen Rationalisierungseffekt darstellt. Diese Zufuhr und Abfuhr von Werkzeugen und Werkstücken am Rüstplatz wird erheblich dadurch erleichtert, dass ein Teil der Fördereinheit im Bereich des Rüstplatzes verläuft.

Erfindungsgemäß sind an der Fördereinheit Werkzeugaufnahmen und Werkstückaufnahmen vorhanden. Die Fördereinheit wird mittels eines Antriebs angetrieben, so dass die dort vorhandenen Werkzeugaufnahmen und Werkstückaufnahmen in wenigstens einer Förderrichtung transportiert werden.

Dabei kann eine Werkzeugaufnahme in eine Wechselposition einfahrbar sein, in welcher mittels der Spindel ein Werkzeug aus der Werkzeugaufnahme entnehmbar oder in dieser ablegbar ist.

Weiterhin kann eine Werkstückaufnahme in eine Wechselposition einfahrbar sein, in welcher mittels der Spindel ein Werkstück aus der Werkstückaufnahme entnehmbar oder in dieser ablegbar ist.

Insbesondere ist an der Spindel oder an einem Spindelstock ein Greifer lagerbar, mittels dessen das Entnehmen eines Werkstücks aus einer Werkstückaufnahme oder das Ablegen dieses Werkstücks in der Werkstückaufnahme durchführbar ist.

Der Greifer ist selbst ein Werkzeug, das bei Bedarf von der Spindel aus einer Werkzeugaufnahme der Fördereinheit aufgenommen werden kann.

Insbesondere bei einer Ausbildung der Bearbeitungsmaschine in Form einer Gantry-Maschine, bei der insbesondere ein Rüstplatz vorhanden ist, kann es vorteilhaft sein, eine Positioniereinheit vorzusehen, mit der die Fördereinheit als Ganzes verschoben werden kann, und zwar in Richtung der Spindel.

Soll ein Werkzeug-Wechsel oder ein Werkstück-Wechsel vorgenommen werden, wird mit der Positioniereinheit die Fördereinheit in Richtung der Spindel verschoben, so dass eine in die Wechselposition eingefahrene Werkzeugaufnahme oder Werkstückaufnahme im Aktionsbereich der Spindel liegt, so dass die Spindel ein Werkzeug aus einer Werkstückaufnahme in der Wechselposition aufnehmen oder in dieser ablegen kann.

Ist ein solcher Werkzeug- oder Werkstück-Wechsel abgeschlossen, kann die Fördereinheit mit der Positioniereinheit von der Spindel weggeschoben werden, so dass diese mit einem Ende aus bzw. im Rüstplatz liegt und insbesondere Bearbeitungsprozesse mit der Spindel nicht stört.

Gemäß einer vorteilhaften Ausführungsform sind die Werkstückaufnahme und Werkzeugaufnahme an einem eine geschlossene Bahn bildenden Fördermittel der Fördereinheit befestigt.

Die Bahn verläuft in einer Ebene, vorzugsweise in einer horizontalen Ebene.

Das Fördermittel wird von einem Antrieb, insbesondere von einem elektrischen Antrieb angetrieben, der vorteilhaft von einer Steuereinheit gesteuert wird. Dabei können die Werkzeugaufnahmen und Werkstückaufnahmen am Fördermittel in zwei Förderrichtungen bewegt werden, nämlich im und gegen den Uhrzeigersinn.

Gemäß einer vorteilhaften Ausgestaltung ist das Fördermittel eine Kette. Die Fördereinheit ist dann als Kettenförderer ausgebildet.

Prinzipiell kann das Fördermittel auch von einem Band gebildet sein, so dass die Fördereinheit ein Bandförderer ist.

Erfindungsgemäß sind die Werkstückaufnahmen geometrisch optimiert ausgebildet, so dass an diesem Werkstück unterschiedliche Geometrien und Formen gelagert werden können. Insbesondere können die Werkstückaufnahmen auch große Werkstücke aufnehmen. Dabei sind die Werkstückaufnahmen relativ zu den Werkzeugaufnahmen so angeordnet, dass die Werkzeugaufnahmen die Aufnahme von Werkstücken an den Werkstückaufnahmen nicht begrenzen bzw. behindern.

Gemäß einer ersten Variante der Erfindung bilden die Werkstückaufnahmen einerseits und die Werkzeugaufnahmen andererseits an der Fördereinheit räumlich getrennte, in Förderrichtung der Fördereinheit in Abstand liegende Einheiten.

Insbesondere sind alle Werkzeugaufnahmen und Werkstückaufnahmen einzeln und in Förderrichtung in Abstand zueinander an der Fördereinheit angeordnet.

Durch die getrennte, räumlich versetzte Anordnung der Werkstückaufnahmen von den Werkzeugaufnahmen wird erreicht, dass an den Werkstückaufnahmen Werkstücke unterschiedlicher Größen und Geometrien gelagert werden können.

Gemäß einer zweiten Variante der Erfindung sind die Werkstückaufnahmen an der Oberseite der Fördereinheit angeordnet. Damit kann ein Werkstück, insbesondere mit einem Greifer an der Spindel, von einer Werkstückaufnahme in der Wechselposition einfach und nahezu ohne geometrische Restriktionen aufgenommen oder dort abgelegt werden.

Besonders vorteilhaft sind beide Varianten der Erfindung in einer UND-Kombination bei der erfindungsgemäßen Bearbeitungsmaschine verwirklicht.

Besonders vorteilhaft weist jede Werkstückaufnahme ein an der Oberseite der Fördereinheit angeordnetes Aufnahmeelement auf, wobei ein Werkstück auf dem Aufnahmeelement liegend angeordnet ist.

Insbesondere ist das Aufnahmeelement plattenförmig ausgebildet.

Das Aufnahmeelement ermöglicht ein besonders einfaches und effizientes automatisiertes Handling bei Aufgreifen eines Werkstücks in der Werkstückaufnahme, insbesondere mittels eines Greifers an der Spindel.

Gemäß einer ersten Variante ist das Werkstück auf einem Schraubstock gelagert und der Schraubstock liegt auf dem Aufnahmeelement auf.

In diesem Fall wird von einer Werkstückaufnahme in der Wechselposition das Werkstück mit dem Schraubstock von der Spindel aufgenommen und einem Bearbeitungsplatz der Bearbeitungsmaschine zugeführt, der vorzugsweise ein Nullpunktspannsystem aufweist. Vorteilhaft sind in der Unterseite des Schraubstocks Zapfen vorgesehen, die in Aufnahmen des Nullpunktspannsystems eingeführt werden, so dass der Schraubstock mit dem Werkstück positionsgenau am Nullpunktspannsystem gelagert ist. Vorteilhaft weist auch das Aufnahmeelement der Werkstückaufnahme entsprechende Aufnahmen, insbesondere Bohrungen auf, in welche die Zapfen des Schraubstocks greifen, so dass dieser sicher gegen Verschiebungen auf dem Aufnahmeelement gelagert ist.

Gemäß einer zweiten Variante liegt das Werkstück unmittelbar auf dem Aufnahmeelement auf.

Das Aufnahmeelement kann konturangepasst an das Werkstück ausgebildet sein um einen sicheren Halt des Werkstücks auf dem Aufnahmeelement zu gewährleisten.

Das vom Aufnahmeelement der Werkstückaufnahme entnommene Werkstück kann in diesem Fall in einen Schraubstock am Bearbeitungsplatz eingesetzt werden.

Bei der erfindungsgemäßen Bearbeitungsmaschine sind generell die Werkzeugaufnahmen zur Aufnahme von Werkzeugen, nicht jedoch von Werkstücken ausgebildet. Umgekehrt sind die Werkstückaufnahmen nur zur Aufnahme von Werkstücken, nicht jedoch von Werkzeugen ausgebildet.

Die einzelnen Werkstückaufnahmen an der Fördereinheit sind vorteilhaft, aber nicht zwingend identisch ausgebildet. Ebenso sind die einzelnen Werkzeugaufnahmen von der Fördereinheit vorteilhaft aber nicht zwingend identisch ausgebildet.

Die Erfindung wird im Folgenden anhand der Zeichnungen erläutert. Es zeigen:
- Figur 1:: Ausführungsbeispiel der erfindungsgemäßen Bearbeitungsmaschine.
- Figur 2:: Erste vergrößerte Teildarstellung der Anordnung gemäß Figur 1.
- Figur 3:: Zweite vergrößerte Teildarstellung der Anordnung gemäß Figur 1.

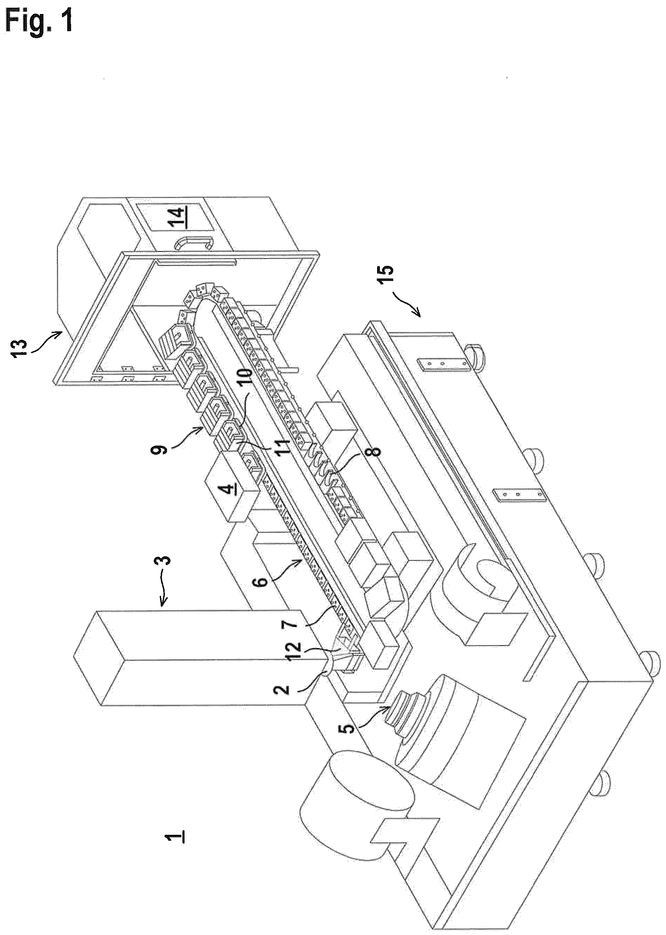

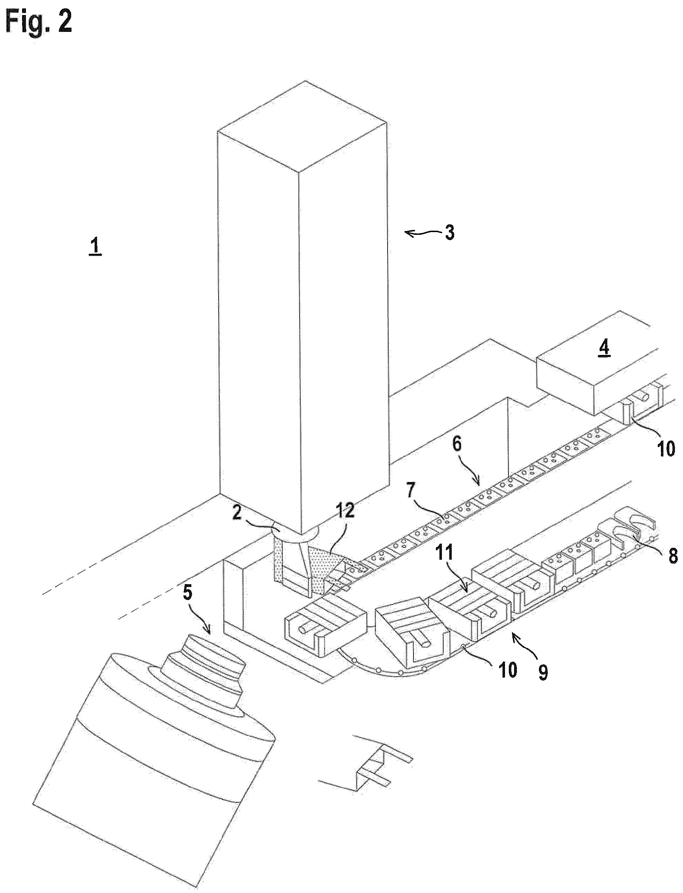

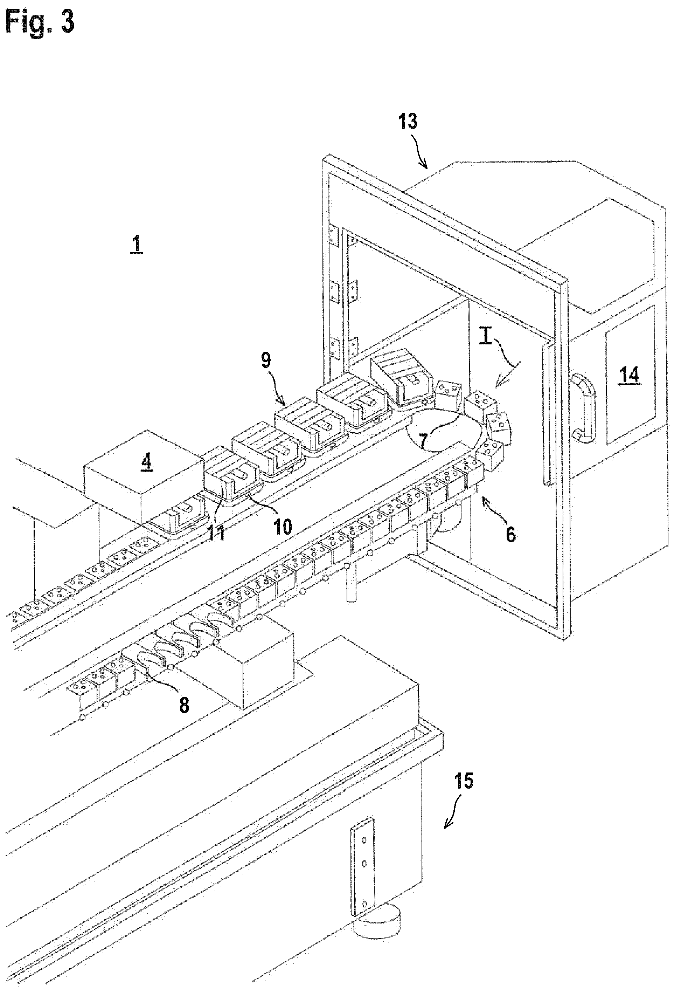

Figur 1 zeigt ein Ausführungsbeispiel der erfindungsgemäßen Bearbeitungsmaschine 1. Die Figuren 2 und 3 zeigen vergrößerte Teildarstellungen der Anordnung gemäß Figur 1.

Die Bearbeitungsmaschine 1 ist im vorliegenden Fall eine Werkzeugmaschine in Gantry-Bauweise.

Die Bearbeitungsmaschine 1 weist eine Spindel 2 auf, die am unteren Ende eines Spindelgehäuses 3 angeordnet ist. Die Spindel 2 kann mit nicht dargestellten Antriebseinheiten in Horizontal- und Vertikalrichtung verfahren und um ihre Längsachse in Drehbewegungen versetzt werden. Die Bewegungen der Spindel 2 werden von einer nicht dargestellten Steuereinheit, die die gesamte Bearbeitungsmaschine 1 steuert, gesteuert. Damit können mit einem in den Figuren nicht dargestelltem Werkzeug, das an der Spindel 2 angebracht wird, Bearbeitungsprozesse durchgeführt werden. Insbesondere werden Werkstücke 4 durch Bohren, Fräsen, Schleifen und dergleichen bearbeitet. Die Bearbeitung eines Werkstücks 4 erfolgt an einem Bearbeitungsplatz der Bearbeitungsmaschine 1, der im vorliegenden Fall ein Nullpunktspannsystem 5 aufweist.

Die Bearbeitungsmaschine 1 weist einen in diesem integrierten Werkzeugwechsler 6 auf, der im Wesentlichen von einer Fördereinheit gebildet ist. Die Fördereinheit weist ein Fördermittel 7 auf, das im vorliegenden Fall von einer Kette gebildet ist.

Die Kette, die eine geschlossene Bahn ausbildet, verläuft in einer horizontalen Ebene.

Das Fördermittel 7 der Fördereinheit wird von einem nicht dargestellten elektrischen Antrieb angetrieben, der von der Steuereinheit gesteuert wird. Dadurch kann das Fördermittel 7 in zwei Förderrichtungen, entweder im Uhrzeigersinn oder entgegen dem Uhrzeigersinn bewegt werden.

An der Außenseite der Fördermittel 7 sind Werkzeugaufnahmen 8 befestigt. In jeder Werkzeugaufnahme 8 kann ein Werkzeug aufgenommen werden (in den Figuren nicht dargestellt). Die Werkzeugaufnahmen 8 weisen im vorliegenden Fall die Form von nach außen offenen Klammern auf. Die Werkzeugaufnahmen 8 sind im vorliegenden Fall identisch ausgebildet, was jedoch nicht zwingend ist.

Erfindungsgemäß wird der Werkzeugwechsler 6 nicht nur zum Transport und zur Lagerung von Werkzeugen sondern auch von Werkstücken 4 eingesetzt.

Hierzu sind am Fördermittel 7 Werkstückaufnahmen 9 befestigt. Diese sind im vorliegenden Fall identisch ausgebildet, was jedoch nicht zwingend ist.

Jede Werkzeugaufnahme 8 ist nur zur Aufnahme von Werkzeugen, jede Werkstückaufnahme 9 ist nur zur Aufnahme von Werkstücken 4 ausgebildet.

Erfindungsgemäß bilden die Werkzeugaufnahmen 8 und die Werkstückaufnahmen 9 räumlich getrennte separate Einheiten. Die Werkstückaufnahmen 9 liegen in Förderrichtung der Fördereinheit beabstandet zu den Werkzeugaufnahmen 8.

Dabei bilden alle Werkstückaufnahmen 9 und Werkzeugaufnahmen 8 einzelne Einheiten, die in Förderrichtung der Fördereinheit in Abstand zur jeweils benachbarten Einheit liegen.

Erfindungsgemäß sind die Werkstückaufnahmen 9 an der Oberseite des Fördermittels 7, d.h. der Fördereinheit angeordnet.

Jede Werkstückaufnahme 9 weist ein plattenförmiges Aufnahmeelement 10 auf, auf dem ein Schraubstock 11 gelagert ist. Auf dem Schraubstock 11 kann ein Werkstück 4 gelagert werden. Das Aufnahmeelement 10 verläuft in einer horizontalen Ebene.

Alternativ könnte ein Werkstück 4 auch direkt auf dem plattenförmigen Aufnahmeelement 10 gelagert werden

Die Funktionsweise der Bearbeitungsmaschine 1 ist derart, dass durch Verfahren des Fördermittels 7 eine Werkstückaufnahme 9 mit einem darauf gelagerten Werkstück 4 in eine Wechselposition eingefahren werden kann. Dort kann das Werkstück 4 mit einem Greifer 12, der an der Spindel 2 befestigt ist, mit dem Schraubstock 11 aufgegriffen und am Nullpunktspannsystem 5 befestigt werden. Der Greifer kann generell an unterschiedlichen Positionen einer Spindeleinheit gelagert sein, insbesondere an einem Spindelstock bzw. am Spindelgehäuse 3. Ebenso kann auf diese Weise ein am Nullpunktspannsystem 5 bearbeitetes Werkstück 4 wieder einer leeren Werkstückaufnahme 9 zugeführt werden.

Weiterhin kann eine Werkzeugaufnahme 8 mit einem daran gelagerten Werkzeug in die oder eine Wechselposition verfahren werden, so dass die Spindel 2 diese aufnehmen kann um anschließend Bearbeitungsvorgänge durchzuführen. Ebenso kann nach einem Bearbeitungsvorgang ein Werkzeug an der Spindel 2 in einer leeren Werkzeugaufnahme 8 abgelegt werden.

Um das Einfahren einer Werkzeugaufnahme 8 oder Werkstückaufnahme 9 in eine Wechselposition zu unterstützen, kann eine automatisch arbeitende, nicht dargestellte Positioniereinheit vorgesehen sein, die die Fördereinheit in Richtung der Spindel 2 verschiebt (gekennzeichnet mit dem Pfeil I in Figur 3).

Nach einem Werkzeug- oder Werkstück-Wechsel kann die Fördereinheit mit der Positioniereinheit wieder in ihre ursprüngliche Stellung verfahren werden.

Die als Gantry-Maschine ausgebildete Bearbeitungsmaschine 1 weist an ihrer der Spindel 2 abgewandten Seite einen Rüstplatz auf. Dieser wird gebildet durch eine Verkleidung 13 mit mehreren seitlichen Öffnungen 14. Die Figuren 1 und 3 zeigen diese Verkleidung 13 abgesetzt vom Rahmen 15 der Bearbeitungsmaschine 1.

Bei fertig montierter Bearbeitungsmaschine 1 ist diese Verkleidung 13 am hinteren Ende des Rahmens 15 befestigt.

Am Rüstplatz ist Haupt-Zeit-Parallel, d.h. während der Bearbeitung von Werkstücken 4 mittels der Spindel 2 eine Umrüstung von Werkzeugen und/oder Werkstücken 4 an der Fördereinheit, die mit ihrem hinteren Ende in den Rüstplatz ragt, möglich.

### Bezugszeichenliste

- (1): Bearbeitungsmaschine
- (2): Spindel
- (3): Spindelgehäuse
- (4): Werkstück
- (5): Nullpunktspannsystem
- (6): Werkzeugwechsler
- (7): Fördermittel
- (8): Werkzeugaufnahme
- (9): Werkstückaufnahme
- (10): Aufnahmeelement
- (11): Schraubstock
- (12): Greifer
- (13): Verkleidung
- (14): Öffnung
- (15): Rahmen

## Patentansprüche

1. Bearbeitungsmaschine (1) mit einer Verfahrbewegungen durchführenden Spindel (2), wobei mit einem an der Spindel (2) gelagerten Werkzeug ein Werkstück (4) bearbeitbar ist, und mit einer Fördereinheit, an welcher Werkzeugaufnahmen (8) vorhanden sind, die in einer Förderrichtung bewegbar sind, wobei jede Werkzeugaufnahme (8) zur Lagerung eines Werkzeugs ausgebildet ist, **dadurch gekennzeichnet, dass** die Fördereinheit in der Bearbeitungsmaschine (1) integriert ist, dass an der Fördereinheit Werkstückaufnahmen (9) vorhanden sind, wobei jede Werkstückaufnahme (9) zur Aufnahme eines Werkstück (4) ausgebildet ist, wobei die Werkstückaufnahmen (9) und die Werkzeugaufnahmen (8) jeweils räumlich getrennte, in Förderrichtung in Abstand liegende Einheiten bilden und/oder den in den Werkstückaufnahmen (9) gelagerten Werkstücke (4) an der Oberseite der Fördereinheit angeordnet sind.

2. Bearbeitungsmaschine (1) nach Anspruch 1, **dadurch gekennzeichnet, dass** alle Werkzeugaufnahmen (8) und Werkstückaufnahmen (9) einzeln und in Förderrichtung in Abstand zueinander an der Fördereinheit angeordnet sind.

3. Bearbeitungsmaschine (1) nach einem der Ansprüche 1 oder 2, **dadurch gekennzeichnet, dass** jede Werkstückaufnahme (9) ein an der Oberseite der Fördereinheit angeordnetes Aufnahmeelement (10) aufweist, wobei ein Werkstück (4) auf dem Aufnahmeelement (10) liegend angeordnet ist.

4. Bearbeitungsmaschine (1) nach Anspruch 3, **dadurch gekennzeichnet, dass** das Werkstück (4) unmittelbar auf dem Aufnahmeelement (10) aufliegt, oder dass das Werkstück (4) auf einem Schraubstock (11) gelagert ist und der Schraubstock (11) auf dem Aufnahmeelement (10) aufliegt.

5. Bearbeitungsmaschine (1) nach einem der Ansprüche 1 bis 4, **dadurch gekennzeichnet, dass** alle Werkstückaufnahmen (9) nur zur Aufnahme von Werkstücken (4) ausgebildet sind, und/oder dass alle Werkzeugaufnahmen (8) nur zur Aufnahme von Werkzeugen ausgebildet sind.

6. Bearbeitungsmaschine (1) nach einem der Ansprüche 1 bis 5, **dadurch gekennzeichnet, dass** die Werkstückaufnahmen (9) und Werkzeugaufnahmen (8) an einem eine geschlossene Bahn bildenden Fördermittel (7) der Fördereinheit befestigt sind.

7. Bearbeitungsmaschine (1) nach Anspruch 6, **dadurch gekennzeichnet, dass** das Fördermittel (7) eine Kette ist.

8. Bearbeitungsmaschine (1) nach einem der Ansprüche 6 oder 7, **dadurch gekennzeichnet, dass** das Fördermittel (7) in einer horizontalen Ebene orientiert ist.

9. Bearbeitungsmaschine (1) nach einem der Ansprüche 1 bis 8, **dadurch gekennzeichnet, dass** eine Werkzeugaufnahme (8) in eine Wechselposition einfahrbar ist, in welcher mittels der Spindel (2) ein Werkzeug aus der Werkzeugaufnahme (8) entnehmbar oder in dieser ablegbar ist.

10. Bearbeitungsmaschine (1) nach einem der Ansprüche 1 bis 9, **dadurch gekennzeichnet, dass** eine Werkstückaufnahme (9) in eine Wechselposition einfahrbar ist, in welcher mittels der Spindel (2) ein Werkstück (4) aus der Werkstückaufnahme (9) entnehmbar oder in dieser ablegbar ist.

11. Bearbeitungsmaschine (1) nach Anspruch 10, **dadurch gekennzeichnet, dass** an der Spindel (2) oder an einem Spindelstock ein Greifer (12) lagerbar ist, mittels dessen das Entnehmen eines Werkstücks (4) aus einer Werkstückaufnahme (9) oder das Ablegen eines Werkstücks (4) in der Werkstückaufnahme (9) durchführbar ist.

12. Bearbeitungsmaschine (1) nach einem der Ansprüche 1 bis 11, **dadurch gekennzeichnet, dass** eine Positioniereinheit vorhanden ist, mittels derer die Fördereinheit relativ zur Spindel (2) positionierbar ist.

13. Bearbeitungsmaschine (1) nach einem der Ansprüche 1 bis 12, **dadurch gekennzeichnet, dass** diese einen Rüstplatz aufweist an welchem Haupt-Zeit-Parallel Rüstvorgänge durchgeführt werden.

14. Bearbeitungsmaschine (1) nach Anspruch 13, **dadurch gekennzeichnet, dass** ein Teil der Fördereinheit im Bereich des Rüstplatzes verläuft.

15. Bearbeitungsmaschine (1) nach einem der Ansprüche 1 bis 14, **dadurch gekennzeichnet, dass** diese in einer Gantry-Bauweise ausgeführt ist.
